(19) 

Europäisches Patentamt
European Patent Office
Office européen des brevets

(11) **EP 2 894 701 A1**

(12) **EUROPEAN PATENT APPLICATION**
published in accordance with Art. 153(4) EPC

(43) Date of publication:
**15.07.2015 Bulletin 2015/29**

(21) Application number: **13835661.3**

(22) Date of filing: **30.08.2013**

(51) Int Cl.:
*H01M 4/587* (2010.01)   *C01B 31/02* (2006.01)

(86) International application number:
**PCT/JP2013/073434**

(87) International publication number:
**WO 2014/038493 (13.03.2014 Gazette 2014/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.09.2012 JP 2012196568**
**06.09.2012 JP 2012196569**

(71) Applicants:
• **Kureha Corporation**
**Tokyo 103-8552 (JP)**
• **Kureha Battery Materials Japan Co. Ltd.**
**Tokyo 103-8552 (JP)**

(72) Inventors:
• **KOMATSU, Mayu**
**Tokyo 103-8552 (JP)**
• **WAKAHOI, Takashi**
**Tokyo 103-8552 (JP)**
• **TADA, Yasuhiro**
**Tokyo 103-8552 (JP)**
• **SONOBE, Naohiro**
**Tokyo 103-8552 (JP)**
• **HASEGAWA, Kazuyuki**
**Tokyo 103-8552 (JP)**

(74) Representative: **Zimmermann & Partner Patentanwälte mbB**
**Postfach 330 920**
**80069 München (DE)**

(54) **METHOD FOR PRODUCING CARBONACEOUS MATERIAL FOR NEGATIVE ELECTRODES OF NONAQUEOUS ELECTROLYTE SECONDARY BATTERIES**

(57) An object of the present invention is to provide a method of producing, stably and at high yield, a carbonaceous material for non-aqueous electrolyte secondary battery negative electrodes, whose raw material is coffee bean, that has high purity achieved by de-mineralization in which alkali metals such as potassium element and alkaline earth metal such as calcium element are sufficiently removed, and that can guarantee reliability, and an intermediate product for obtaining the same.

A raw material composition for producing a carbonaceous material for non-aqueous electrolyte secondary battery negative electrodes comprises a roasted coffee bean-derived organic material having an L value of 18.0 or less. The raw material composition for producing a carbonaceous material for non-aqueous electrolyte secondary battery negative electrodes is formed from a roasted coffee bean-derived organic material having an L value of 19.0 or less.

EP 2 894 701 A1

**Description**

TECHNICAL FIELD

The present invention relates to a method of producing a carbonaceous material for non-aqueous electrolyte secondary battery negative electrodes and a carbonaceous material for non-aqueous electrolyte secondary battery negative electrodes that is obtained.

BACKGROUND ART

In recent years, the notion of mounting large lithium-ion secondary batteries, having high energy density and excellent output energy characteristics, in electric vehicles has been investigated in response to increasing concern over environmental issues. In small mobile device applications such as mobile telephones or laptop computers, the capacity per unit volume is important, so graphitic materials with a large density have primarily been used as active material for negative electrode. However, lithium-ion secondary batteries for vehicles are large and expensive and thus it is difficult to replace the lithium-ion secondary batteries while using the vehicle. Therefore, the lithium-ion secondary batteries for vehicles are required to have at least the same durability as that of vehicles and demanded to have a product life of 10 years or longer (high durability). When graphitic materials or carbonaceous materials with a developed graphite structure are used, there is a tendency for damage to occur due to crystal expansion and contraction caused by repeated lithium doping and de-doping, which diminishes the charge/discharge repetition performance. Therefore, such materials are not suitable as negative electrode materials for lithium-ion secondary batteries for vehicles which require high cycle durability. In contrast, non-graphitizable carbon is suitable for use in automobile applications from the perspective of involving little particle expansion and contraction due to lithium doping and de-doping and having high cycle durability (Patent Document 1).

Conventionally, pitch, polymer compounds, plant-based organic materials, and the like have been investigated as carbon sources of non-graphitizable carbons. Pitch include petroleum-based pitch and coal-based pitch. Since the pitch contains large amount of various metal impurities, these impurities have to be removed when the pitch is used. Bottom oil, which is refined in a step of producing ethylene from naphtha or the like, is considered to be a petroleum-based pitch. Although the bottom oil can be a good raw carbon material due to little content of impurities, there are problems such as containing a large amount of light component and resulting in low carbonization yield. The pitch has a property to generate graphitizable carbons (such as cokes) via heat treatment, and in order to produce non-graphitizable carbons, crosslinking is necessary. Therefore, in order to prepare non-graphitizable carbons from pitch, a large number of steps are required.

By heat-treating polymer compounds, in particular, thermosetting resins such as phenol resins or furan resins, non-graphitizable carbons can be obtained. However, since a large number of steps, including synthesis of a monomer for obtaining a polymer compound, polymerization, carbonization, and similar steps, are required thereby increasing the production cost, this method involves many problems, as a method of battery production that requires low cost and large quantities.

Contrary to this, the present inventors found that a carbon source obtained by plant-based organic material is promising as a negative electrode material because the carbon source can dope a large amount of active materials (Patent Document 2). Furthermore, since, when a plant-based organic material is used as a carbon source of a carbonaceous material for negative electrodes, minerals such as potassium element and calcium element present in an organic raw material can negatively affect doping and de-doping characteristics of a carbonaceous material used in a negative electrode, a method of reducing the content of potassium element by subjecting the plant-based organic material to a de-mineralizing treatment (hereinafter, referred to as "liquid phase de-mineralization") using acid washing (Patent Documents 2 and 3).

On the other hand, Patent Document 4 discloses de-mineralizing treatment using hot water and waste coffee beans that have not undergone a heat treatment at 300°C or higher. According to this method in which a raw material with no heat treatment is used, even in the case where a raw material with a particle size of 1 mm or greater is used, the potassium content can be reduced to 0.1 mass% or less and filtration properties can be also improved.

CITATION LIST

Patent Literatures

Patent Document 1: Japanese Unexamined Patent Application Publication No. H08-064207A

Patent Document 2: Japanese Unexamined Patent Application Publication No. H09-161801A
Patent Document 3: Japanese Unexamined Patent Application Publication No. H10-021919A
Patent Document 4: Japanese Unexamined Patent Application Publication No. 2000-268823A

SUMMARY OF INVENTION

Technical Problem

However, compared to carbonaceous materials that are derived from synthesized raw materials, a carbonaceous material whose raw material is a plant-based organic material tends to result in unstable quality due to heterogeneity or the like of the raw material. Furthermore, a carbonaceous material for a non-aqueous electrolyte secondary battery always involves a large discharging capacity and is required to have excellent charge/discharge characteristics with a small irreversible capacity. However, when a plant-based organic material is used as a raw material, there are less methods available for modifying the plant-based organic material in production steps compared to the case where a synthetic raw material is used, and the degree of enhancing battery performance such as charge/discharge characteristics has been limited.

Furthermore, when a carbonaceous material is produced using a plant-based organic material, since most part of the plant-based organic material is removed as volatile matters or tar, there has been a problem in that the amount of the carbonaceous material that is eventually obtained is small. On the other hand, a method of efficiently producing a large amount of useful carbonaceous material described above from coffee beans has not been investigated so far.

Furthermore, although there is room for improvement on characteristics of the carbonaceous material, as an active material for negative electrode, whose raw material is coffee bean, improvement made so far has been mainly for production process, and effects on the active material for negative electrode made by difference in coffee beans, which is the raw material, has not been investigated yet.

An object of the present invention is to provide a technology that can provide a carbonaceous material for non-aqueous electrolyte secondary battery negative electrodes, whose raw material is a plant-based organic material, exhibiting excellent charge/discharge performances and having stable quality.

Another object of the present invention is to provide a method of producing, stably and at high yield, a carbonaceous material for non-aqueous electrolyte secondary battery negative electrodes, whose raw material is coffee bean, that has high purity obtained by sufficiently de-mineralizing alkali metals such as potassium element and alkaline earth metal such as calcium element, and that can guarantee reliability, and an intermediate product for obtaining the same.

SOLUTION TO PROBLEM

The present inventors have found that, by using an extraction residue of a mixture (blended product) of two or more roasted plants having different degree of roasting, or a mixture (blended product) of two or more extraction residues of roasted plants having different degree of roasting, the quality of a carbonaceous material is stabilized and charge/discharge characteristics (discharging capacity and irreversible capacity) of a non-aqueous electrolyte secondary battery produced by using a carbonaceous material prepared by blending the extraction residues of the roasted plants are enhanced compared to the numerical values of charge/discharge characteristics of the case where the extraction residues are not blended calculated using the blending proportion. Thus the present invention has been completed.

Furthermore, since coffee beans for drinking are generally subjected to roasting, thermal history of the coffee beans varies depending on degree of roasting. The present inventors have found that the degree of roasting of the coffee beans significantly affects production efficiency (yield), and thus completed the present invention.

Therefore, the present invention relates to the following.

[1] A raw material composition for producing a carbonaceous material for non-aqueous electrolyte secondary battery negative electrodes, the raw material composition comprising a roasted coffee bean-derived organic material having an L value of 18.0 or less.

[2] The raw material composition for producing a carbonaceous material for non-aqueous electrolyte secondary battery negative electrodes according to [1], wherein the raw material composition is formed from a roasted coffee bean-derived organic material having an L value of 19.0 or less.

[3] A raw material composition for producing a carbonaceous material for non-aqueous electrolyte secondary battery negative electrodes, the raw material composition comprising an extraction residue of a mixture of two or more roasted plants having different degree of roasting, or a mixture of two or more extraction residues of roasted plants having different degree of roasting.

[4] The raw material composition according to [3], wherein the roasted plant is a roasted coffee bean.

[5] The raw material composition according to [4], wherein an L value of the mixture of two or more roasted plants is 16 or greater but 19 or less.

[6] A method of producing an intermediate product for producing a carbonaceous material for non-aqueous electrolyte secondary battery negative electrodes, the method comprising the steps of: de-mineralizing the raw material composition described in any one of [1] to [5], and de-tarring the de-mineralized raw material composition at 300°C or higher but 1000°C or lower.

[7] The method of producing an intermediate product for producing a carbonaceous material for non-aqueous electrolyte secondary battery negative electrodes according to [6], wherein the de-mineralizing is performed by using an acidic solution.

[8] The method of producing an intermediate product for producing a carbonaceous material for non-aqueous electrolyte secondary battery negative electrodes according to [6] or [7], the method further comprising a step of milling the de-mineralized raw material composition.

[9] An intermediate product obtained by the method described in any one of [6] to [8].

[10] A method of producing a carbonaceous material for non-aqueous electrolyte secondary battery negative electrodes, the method comprising the steps of: heat treatment the intermediate product produced according to the method described in [6] or [7] at 1000°C or higher but 1500°C or lower, and milling the intermediate product or a heat treated product thereof.

[11] A method of producing a carbonaceous material for non-aqueous electrolyte secondary battery negative electrodes, the method comprising a step of heat treatment the intermediate product produced according to the method described in [8] at 1000°C or higher but 1500°C or lower.

[12] A carbonaceous material for non-aqueous electrolyte secondary battery negative electrodes obtained by the production method described in [10] or [11].

[13] A method of producing a negative electrode for non-aqueous electrolyte secondary batteries, the method comprising the steps of: producing a carbonaceous material for non-aqueous electrolyte secondary battery negative electrodes according to the method described in [10] or [11], and producing a negative electrode for non-aqueous electrolyte secondary batteries using the carbonaceous material for non-aqueous electrolyte secondary battery negative electrodes.

[14] A method of producing a non-aqueous electrolyte secondary battery, the method comprising the steps of: producing a negative electrode for non-aqueous electrolyte secondary batteries according to the method described in [13], and producing a non-aqueous electrolyte secondary battery using the negative electrode for non-aqueous electrolyte secondary batteries.

[15] A method of producing a vehicle, the method comprising the steps of: producing a non-aqueous electrolyte secondary battery according to the method described in [14], and mounting the non-aqueous electrolyte secondary battery.

ADVANTAGEOUS EFFECTS OF INVENTION

According to the method of producing a carbonaceous material for non-aqueous electrolyte secondary battery negative electrodes of the present invention, it is possible to obtain, industrially and in large quantities, a carbonaceous material for negative electrodes that is derived from coffee beans and has excellent electric properties as a negative electrode made of a carbonaceous material for negative electrodes.

According to the method of producing a carbonaceous material for non-aqueous electrolyte secondary battery negative electrodes of the present invention, it is possible to produce, stably and in large quantities, a carbonaceous material having a suitable quality as a non-aqueous electrolyte secondary battery negative electrode material by using an extraction residue of a mixture (blended product) of two or more roasted plants having different degree of roasting, or a mixture (blended product) of two or more extraction residues of roasted plants having different degree of roasting as a raw material composition. Furthermore, charge/discharge characteristics (discharging capacity and irreversible capacity) of a non-aqueous electrolyte secondary battery produced by using a carbonaceous material prepared by blending the extraction residues of the roasted plants are enhanced compared to the numerical values of charge/discharge characteristics of the case where the extraction residues are not blended calculated using the blending proportion.

Carbon structures derived from plants having different degrees of roasting are different each other, and a carbonaceous material having disordered crystal structure will, as its charge/discharge characteristics, exhibit greater discharging capacity and greater irreversible capacity. On the other hand, a carbonaceous material having highly ordered crystal structure will exhibit smaller discharging capacity and smaller irreversible capacity. It is conceived that the highly ordered crystal structure of a carbonaceous material results in greater development of hexagonal carbon layer and greater electrical conductivity. As a result, it is conceived that the charge/discharge characteristics that are better than performances expected in an unblended product can be obtained because of the interaction due to coexistence of high capacity components and low resistance components resulted from the blending.

DESCRIPTION OF EMBODIMENTS

Hereinafter, embodiments of the present invention will be described.

[1] Method of producing carbonaceous material for non-aqueous electrolyte secondary battery negative electrodes

The method of producing a carbonaceous material for non-aqueous electrolyte secondary battery negative electrodes of the present invention is a method of producing a carbonaceous material whose raw material is an extraction residue of a mixture (blended product) of roasted plants having different degree of roasting, or a mixture (blended product) of extraction residues of roasted plants having different degree of roasting. That is, the method of the present invention is a method of producing a carbonaceous material in which a mixture of roasted plants is used as a raw material composition (hereinafter, also referred to as "method of producing a mixture"). For example, the method of producing a mixture uses, as a raw material, a raw material composition for producing a carbonaceous material for non-aqueous electrolyte secondary battery negative electrodes having an average particle size of 100 $\mu$m or greater and comprising an extraction residue of a mixture of two or more roasted plants having different degree of roasting, or a mixture of two or more extraction residues of roasted plants having different degree of roasting; furthermore, the method may comprise the steps of: (1) de-mineralizing (hereinafter, also referred to as "de-mineralizing step"); (3) de-tarring the de-mineralized raw material composition at 300 to 1000°C (hereinafter, also referred to as "de-tarring step"); (4) milling the raw material composition, the de-mineralized raw material composition, or a carbonized material (a carbonized material after de-tarring or a carbonized material after final heat treatment) to an average particle size of 2 to 50 $\mu$m (hereinafter, also referred to as "milling step"); and (5) heat treatment at 1000 to 1500°C in a non-oxidation atmosphere (hereinafter, also referred to as "heat treatment step"). Furthermore, the method of producing a mixture preferably comprises a step of (2) oxidizing in which the raw material composition is heated in an oxidizing atmosphere prior to de-tarring (hereinafter, also referred to as "oxidizing step").

Furthermore, the method of producing a carbonaceous material for non-aqueous electrolyte secondary battery negative electrodes of the present invention is a method of producing a carbonaceous material using a roasted coffee bean-derived organic material having an L value of 18.0 or less as a raw material, and comprising at least the steps of de-mineralizing and de-tarring. That is, the method of the present invention is a method of producing a carbonaceous material in which a roasted coffee bean having a specific L value is used as a raw material composition (hereinafter, also referred to as "method of producing roasted coffee beans"). For example, the method of producing roasted coffee beans uses, as a raw material, a raw material composition for producing a carbonaceous material for non-aqueous electrolyte secondary battery negative electrodes comprising a roasted coffee bean-derived organic material having an average particle size of 100 $\mu$m or greater and an L value of 18.0 or less; furthermore, the method may comprise the steps of: (1) de-mineralizing (hereinafter, also referred to as "de-mineralizing step"); (3) de-tarring the de-mineralized raw material composition at 300 to 1000°C (hereinafter, also referred to as "de-tarring step"); (4) milling the raw material composition, the de-mineralized raw material composition, or a carbonized material (a carbonized material after de-tarring or a carbonized material after final heat treatment) to an average particle size of 2 to 50 $\mu$m (hereinafter, also referred to as "milling step"); and (5) heat treatment at 1000 to 1500°C in a non-oxidation atmosphere (hereinafter, also referred to as "heat treatment step"). Furthermore, the method of producing roasted coffee beans preferably comprises a step of (2) oxidizing in which the raw material composition is heated in an oxidizing atmosphere prior to de-tarring (hereinafter, also referred to as "oxidizing step"). Between the method of producing a mixture and the method of producing roasted coffee beans which are two aspects of the method of producing a carbonaceous material for non-aqueous electrolyte secondary battery negative electrodes of the present invention, there are some differences in the raw material compositions and the de-mineralizing step (1); however, the oxidizing step (2), the de-tarring step (3), the milling step (4), and the heat treatment step (5) can be performed in the same manner.

(Roasted plant extraction residue)

Although the raw material composition used in the method of producing a mixture of the present invention is a plant-based organic material, the raw material composition is, more specifically, an extraction residue of a mixture of two or more roasted plants having different degree of roasting, or a mixture of two or more extraction residues of roasted plants having different degree of roasting.

The roasted plant extraction residue which is the raw material is not particularly limited; however, examples thereof include coffee, tea, barley, and the like that are used to make beverages. An extraction residue in which the roasted plants have been extracted has undergone extraction/removal of some mineral components when the component is extracted. Among these, industrially extracted coffee extraction residues are particularly preferable because these extraction residues are adequately milled and available in large quantity. Furthermore, since industrially used coffee is used after coffee beans are roasted and blended, the industrially used coffee and residue thereof are included in the blended product of roasted plants having different degree of roasting and the extraction residue of blended product of roasted plants having different degree of roasting.

Since a carbonaceous material for negative electrodes produced by these roasted plant extraction residues can dope a large amount of active materials, the carbonaceous material is useful as a negative electrode material for non-aqueous electrolyte secondary batteries. However, the plant-based organic material contains a large amount of metal elements and, in particular, contains large amount of potassium and calcium. Furthermore, the carbonaceous material produced from the plant-based organic material containing a large amount of metal elements negatively affects electrochemical properties and safety when used as a negative electrode. Therefore, the content of potassium element and calcium element contained in the carbonaceous material for negative electrodes is preferably reduced as much as possible.

L value is often used to quantify the degree of roasting of the roasted plant. Here, "L value" refers to a lightness value, which treats black as the L value of 0 and white as the L value of 100, of a roasted plant (e.g. a roasted coffee bean) measured by a color-difference meter. That is, the L value is an indicator of degree of roasting of a roasted plant. As the degree of roasting of a roasted plant is greater, the color of the roasted plant becomes darker and the L value results in a low value. On the other hand, as the degree of roasting is less, the L value results in a high value.

In the method of producing a carbonaceous material of the present invention, the blending of the roasted plants or the mixing of the extraction residues are preferably performed in a manner such that the L value described above becomes 16 or greater but 19 or less. As long as the L value is within this range, the true density of a carbonaceous material that is eventually produced will be in a suitable range as a negative electrode. Therefore, when the carbonaceous material is used in a non-aqueous electrolyte secondary battery, the capacity and cycle characteristics of the non-aqueous electrolyte secondary battery will be excellent.

(Roasted coffee bean extraction residue)

Although the raw material composition used in the method of producing roasted coffee beans of the present invention is a coffee bean-derived organic material, the raw material composition is, more specifically, a roasted coffee bean-derived organic material having the L value of 18.0 or less. The raw material composition is preferably a raw material composition formed from a roasted coffee bean-derived organic material having an L value of 19.0 or less.

For the roasted coffee bean-derived organic material, the type of coffee beans, which is the raw material, is not particularly limited; however, a coffee bean having the L value of 18.0 or less, when the degree of roasting thereof is expressed in terms of the L value described above, must be included in the coffee beans. When a coffee bean having the L value of less than 18 is used, yield of the resulting carbon precursor will be higher, which is preferable. It is conceived that this is because, due to the roasting, an oxygen-containing functional group that is formed by adding an oxygen atom to a terminal of the ring structure of the component due to oxidization at the terminal is produced, and then an aromatic compound is produced as a cyclization reaction proceeds by undergoing a heat treatment step and, simultaneously, a crosslinked structure having the oxygen-containing functional group as a starting point is produced.

This raw material composition may be a single component or a mixture of raw materials obtained from multiple sources. In this case, a roasted coffee bean having the L value of greater than 18.0 may be used together as long as at least a part of the mixture of the raw material compositions has the L value of 18.0 or less. However, the proportion of the beans having the L value of 18.0 or less being great is preferable. The average is preferably 19.0 or less, more preferably 18.7 or less, and even more preferably 18.0 or less. That is, the L value of the roasted coffee beans, which are in the raw material composition, is preferably 19.0 or less, more preferably 18.7 or less, and even more preferably 18.0 or less, as a whole.

From the perspective of yield of the carbonaceous material, in the present invention, it is preferable to use coffee beans having the L value of 18.0 or less, and more preferable to use coffee beans having the L value of 17.8 or less, and even more preferable to use coffee beans having the L value of 17.6 or less.

Since a carbonaceous material for negative electrodes produced by these coffee extraction residues can dope a large amount of active materials, the carbonaceous material is useful as a negative electrode material for non-aqueous electrolyte secondary batteries. However, the plant-based organic material contains a large amount of metal elements and, in particular, contains large amount of potassium and calcium. Furthermore, the carbonaceous material produced from the plant-based organic material containing a large amount of metal elements negatively affects electrochemical properties and safety when the carbonaceous material is used as a negative electrode. Therefore, the contents of potassium element, calcium element, and the like contained in the carbonaceous material for negative electrodes are preferably reduced as much as possible.

Note that the plant-based organic material (in particular, coffee bean) used in the present invention is preferably a plant-based organic material that has not undergone heat treatment at 500°C or higher. In the case where the plant-based organic material is heat-treated at 500°C or higher, de-mineralizing may be insufficient due to carbonization of organic materials. That is, the plant-based organic material used in the present invention is preferably a plant-based organic material that has not undergone heat treatment. For cases where the plant-based organic material is heat-treated, the treatment is performed preferably at 400°C or lower, more preferably at 300°C or lower, and even more preferably at 200°C or lower, and most preferably at 100°C or lower. However, for example, in the case where an extraction residue of coffee beans is used as the raw material, the residue may have undergone heat treatment at approximately 200°C when the coffee beans are roasted; however, the residue can be adequately used as the plant-based organic material used in the present invention.

1. De-mineralizing step

In the method of producing a mixture, which is an aspect of the method of producing a carbonaceous material for non-aqueous electrolyte secondary battery negative electrodes of the present invention, it is possible to perform a de-mineralizing step that removes impurities such as alkali metals for the purpose of reducing the contents of potassium element, calcium element, and the like. As a method of de-mineralizing, either liquid phase de-mineralization method or gas phase de-mineralization method can be used. Furthermore, it is possible to perform the de-mineralization at any stage from the raw material stage to a stage after producing the carbonaceous material. However, in order to reduce the content of potassium element and the content of calcium element as much as possible, it is preferable to perform a de-mineralization in a liquid phase before the de-tarring of extraction residue of a roasted plant, that is the raw material, is performed.

Furthermore, in the method of producing roasted coffee beans, which is an aspect of the method of producing a carbonaceous material for non-aqueous electrolyte secondary battery negative electrodes of the present invention, it is possible to demineralize the coffee extraction residue, that is the raw material, in a liquid phase for the purpose of reducing the contents of potassium element, calcium element, and the like.

The liquid phase de-mineralizing step that can be used in the method of producing the carbonaceous material for non-aqueous electrolyte secondary battery negative electrodes in the present invention is a step of treating the coffee extraction residue in an acidic solution having a pH of 3.0 or less, prior to de-tarring. By this liquid phase de-mineralization, potassium element, calcium element, and the like can be effectively removed; and, in particular, compared to the case where acid is not used, calcium element can be efficiently removed. Furthermore, the liquid phase de-mineralization can remove other alkali metals and alkaline earth metals, as well as transition metals such as copper and nickel.

The acid used in the liquid phase de-mineralization is not particularly limited; however, examples of the acid include strong acids such as hydrochloric acid, hydrofluoric acid, sulfuric acid, and nitric acid, weak acids such as citric acid and acetic acid, and a mixture thereof. The acid is preferably hydrochloric acid or hydrofluoric acid.
The plant-based organic material used in the present invention is preferably a plant-based organic material that has not undergone heat treatment at 500°C or higher. However, for cases where the carbonization of the organic material has been proceeded due to heat treatment at 500°C or higher, the de-mineralization can be sufficiently performed by using hydrofluoric acid. For example, for cases where, after de-tarring a coffee extraction residue at 700°C, the coffee extraction residue was subjected to liquid phase de-mineralization using 35% hydrochloric acid for 1 hour, water washed three times and dried, then milled to 10 $\mu$m, and subjected to final heat treatment at 1250°C, 409 ppm of potassium and 507 ppm of calcium remained. On the other hand, for cases where a mixed solution of 8.8% hydrochloric acid and 11.5% hydrofluoric acid was used, the contents of potassium and calcium were less than or equal to the detection limit of X-ray fluorescence measurement (10 ppm or less).

The value of pH used in the liquid phase de-mineralization is not limited as long as sufficient de-mineralization is achieved; however, pH is preferably 3.0 or less, more preferably 2.5 or less, and even more preferably 2.0 or less. If the value of pH exceeds 3.0, it is inconvenient that the de-mineralization cannot be sufficiently performed.

In the liquid phase de-mineralization of the present invention, the treatment temperature is from 0°C or higher but lower than 100°C, preferably 80°C or lower, more preferably 40°C or lower, and even more preferably at a room temperature (from 20 to 40°C). If the treatment temperature is lower than 80°C, true density (determined by the butanol method) of the carbonaceous material will increase and, when the plant-based organic material is used in a battery, discharging capacity and/or efficiency of the battery will be enhanced. Furthermore, if the de-mineralizing temperature is low, it may take a long time to perform the de-mineralization sufficiently. Although the treatment can be performed in a short period of time if the de-mineralizing temperature is high, it is not preferable since the true density of the carbonaceous material determined by using butanol will be decreased.

The time period used in the liquid phase de-mineralization varies depending on the pH or treatment temperature and is not particularly limited; however, the time period is preferably from 1 minute to 300 minutes, more preferably from 1 minute to 200 minutes, and even more preferably from 1 minute to 150 minutes. If the time period is too short, sufficient de-mineralization cannot be achieved, and if the time period is too long, it is disadvantageous from the perspective of operating efficiency.

The liquid phase de-mineralizing step of the present invention is a step for removing potassium, calcium, and the like contained in the coffee extraction residue. The potassium content after the liquid phase de-mineralizing step is preferably 0.5 mass% or less, more preferably 0.2 mass% or less, and even more preferably 0.1 mass% or less. Furthermore, the calcium content is preferably 0.02 mass% or less, more preferably 0.01 mass% or less, and even more preferably 0.005 mass% or less. If the potassium content exceeds 0.5 mass% and the calcium content exceeds 0.02 mass%, a non-aqueous electrolyte secondary battery using the resulting carbonaceous material for negative electrodes may not only cause decrease in discharge capacity and increase in irreversible capacity but also cause a significant safety problem by causing short-circuit when these metal elements leach out into the electrolyte solution and reprecipitate.

The particle size of the coffee extraction residue used in the liquid phase de-mineralization is not particularly limited. However, if the particle size is too small, since the transparency of the solution during filtration after the de-mineralizing will decrease, the lower limit of the particle size is preferably 100 $\mu$m or greater, more preferably 300 $\mu$m or greater, and even more preferably 500 $\mu$m or greater. Furthermore, the upper limit of the particle size is preferably 10000 $\mu$m or less, more preferably 8000 $\mu$m or less, and even more preferably 5000 $\mu$m or less.

Although the mechanism of efficient removal of potassium, other alkali metals, alkaline earth metals, transition metals, and the like via the liquid phase de-mineralization of the production method of the present invention is not clearly known, it is conceived as described below. It is conceived that, compared to the case where an organic material is heat-treated at 500°C or higher, whereby carbonization proceeds and the organic material becomes hydrophobic, and thus liquid acid does not permeate into the organic material, in the case where an organic material is not heat-treated, the organic material is hydrophilic and thus, when the liquid acid permeates into the organic material, potassium and similar metals contained in the plant-based organic material is precipitated as chloride and the like and removed by water-washing. However, the present invention is not limited to the above description.

2. Oxidizing step

In the production method of the present invention, an oxidizing step in which the coffee extraction residue or the de-mineralized coffee extraction residue is heated in an oxidizing atmosphere may be performed prior to de-tarring. That is, the oxidizing step (2) can be performed prior to the de-mineralizing step (1) or after the de-mineralizing step (1). By performing the oxidation treatment prior to the de-tarring, it is possible to increase the yield of the carbonaceous material and/or reduce the true density of the carbonaceous material compared to the case where a de-mineralized organic material is simply subjected to de-tarring. That is, it is possible to control the crystal structure of the carbonaceous material by making the crystal structure of the carbonaceous material more disordered. This is because the proportion of an oil and fat component, contained in the raw material, that does not distilled off by de-tarring increase, and carbons derived therefrom do not crystallize since crosslinking in the oil and fat component proceeds, making the oil and fat component non-volatile, by the oxidation treatment.

The oxidation treatment is performed by heating a carbon source using an oxidizing gas. Here, $O_2$, $O_3$, $SO_3$, $NO_2$, and a mixed gas in which these gases are diluted with air, an inert gas such as nitrogen, helium, and argon, or the like, or oxidizing gas such as air can be used in the oxidation treatment.

Time required for the oxidation treatment is not particularly limited, and optimal time differs depending on the oxidizing temperature and type of oxidizing gas. For example, when using an oxygen-containing atmosphere and a temperature of 240 to 320°C, the oxidation treatment is preferably performed for 10 minutes to 3 hours, more preferably 30 minutes to 2 hours and 30 minutes, and even more preferably 50 minutes to 1 hour and 30 minutes.

In the production method of the present invention, a carbon source is subjected to de-tarring to form a carbonaceous material precursor. Furthermore, heat treatment performed in order to modify a carbonaceous material precursor into carbonaceous material is called "heat treatment". One-stage heat treatment can be used, or two-stage heat treatment performed at a low temperature and a high temperature can be also used. In this case, the heat treatment at a low temperature is referred to as a pre-heat treatment, and the heat treatment at a high temperature is referred to as a final heat treatment. Note that, in the present specification, "non-carbonizing heat-treating" refers to cases where the main purpose is neither to form a carbonaceous material precursor by removing volatile components from a carbon source (de-tarring) nor to modify a carbonaceous material precursor into a carbonaceous material (heat treatment). Therefore, "non-carbonizing heat-treating" is distinguished from "de-tarring" and "heat treatment". "Non-carbonizing heat-treating" refers to, for example, a heat treatment at lower than 500°C. More specifically, non-carbonizing heat-treating includes roasting of coffee beans at approximately 200°C, or the like. As described above, the plant-based organic material used in the present invention is preferably a plant-based organic material that has not undergone heat treatment at 500°C or higher. That is, a non-carbonizing heat-treated plant-based organic material can be used as the plant-based organic material used in the present invention.

3. De-tarring step

De-tarring is performed by heat treatment a carbon source at 300°C or higher but 1000°C or lower. Furthermore, de-tarring is performed even more preferably at 400°C or higher but lower than 900°C, and most preferably 500°C or higher but lower than 900°C. De-tarring removes volatile components such as $CO_2$, CO, $CH_4$, and $H_2$, and the tar content, so that the generation of these components can be reduced and the burden of the furnace can be reduced in final heat treatment. When the de-tarring temperature is less than 300°C, de-tarring becomes insufficient, and the amount of tar or gas generated in the final heat treatment step after milling becomes large. This may adhere to the particle surface and cause a decrease in battery performance without being able to maintain the surface properties after milling, which is not preferable. On the other hand, when the de-tarring temperature is higher than 1000°C, the temperature exceeds the tar-generating temperature range, and the used energy efficiency decreases, which is not preferable. Furthermore, the generated tar causes a secondary decomposition reaction, and the tar adheres to the intermediate product and may cause a decrease in performance, which is not preferable.

De-tarring is performed in an inert gas atmosphere, and examples of the inert gas include nitrogen, argon, and the like. Furthermore, de-tarring can be performed under reduced pressure, for example, at a pressure of 10 kPa or less. The de-tarring time is not particularly limited but, for example, de-tarring can be performed for 0.5 to 10 hours, and preferably performed for 1 to 5 hours. Furthermore, the milling step can be performed after the de-tarring.

In addition to the steps described above, a step of milling the raw material composition, the intermediate product (carbonaceous material precursor), or a final product and/or a step of heat treatment the intermediate product may be appropriately added to the production method of the present invention depending on the purpose.

(De-tarring in oxygen-containing atmosphere)

In the present invention, de-tarring may be performed in an oxygen-containing atmosphere. The oxygen-containing atmosphere is not limited and, for example, air can be used; however, oxygen-content of the oxygen-containing atmosphere is preferably smaller. Therefore, the oxygen content of the oxygen-containing atmosphere is preferably 20% by volume or less, more preferably 15% by volume or less, even more preferably 10% by volume or less, and most preferably 5% by volume or less. Note that the oxygen content may be, for example, 1% by volume or greater.

Therefore, the present invention relates to a method of producing a carbonaceous material for non-aqueous electrolyte secondary batteries; the method preferably comprising: liquid phase de-mineralizing step (1), oxidizing step (2), de-tarring step (3), milling step (4), and heat treatment step (5); and the de-tarring step (3) is performed in an oxygen-containing atmosphere.

Typically, when de-tarring is performed in an oxygen-containing atmosphere, a side reaction such as an activation occurs and negative effects such as increase in the specific surface area of a carbonaceous material or the like are caused. Therefore, typically, de-tarring must be performed in an inert gas (e.g. nitrogen or argon) atmosphere. However, in the present invention, even when de-tarring is performed in an oxygen-containing atmosphere, increase in specific surface area is not observed. Occurrence/absence of activation can be assumed from the specific surface area of a carbonaceous material that has undergone the heat treatment step (4) after the de-tarring. In the material in which activation occurred, specific surface area increases. For example, when the de-tarring step (3) is performed in an oxygen-containing atmosphere using a plant-based organic material (e.g. coconut shell char) that has been heat-treated at 600°C, the specific surface area of the carbonaceous material that has undergone the heat treatment step (4) thereafter was 60 $m^2$/g; however, when the de-tarring step (3) is performed in an oxygen-containing atmosphere using an plant-based organic material (e.g. coffee residue) that has not been heat-treated at 500°C or higher, the specific surface area of the carbonaceous material that has undergone the heat treatment step (4) thereafter was 6 $m^2$/g, and increase in the specific surface area was not observed. This is an equivalent numerical value to that of a carbonaceous material that has undergone de-tarring in an inert gas atmosphere.

In the present invention, the reason why it is possible to perform de-tarring in an oxygen-containing atmosphere is not clear, it is conceived as described below. Since the plant-based organic material used in the present invention is not heat-treated at high temperatures, a large amount of tar component and gases are generated in the de-tarring step. It is assumed that oxygen is preferentially consumed by oxidation reactions with the generated tar component and/or gases, and oxygen for reacting with the plant-based organic material is used up, thereby inhibiting activation.

In the present invention, de-tarring can be performed in an oxygen-containing atmosphere. Thereby, controlling of atmosphere can be simplified. Furthermore, by reducing used amount of inert gas such as nitrogen, it is possible to reduce the production cost.

4. Milling step

The milling step of the production method of the present invention is a step of milling the organic material (de-mineralized raw material composition) in which potassium and calcium have been removed, the oxidation treated raw material composition, or the carbonized material (carbonized material after de-tarring or carbonized material after final heat treatment) in a manner such that the average particle size after heat treatment becomes 2 to 50 $\mu$m. That is, by the milling step, the carbonaceous material is prepared in the manner such that the average particle size of the resulting carbonaceous material is from 2 to 50 $\mu$m. The milling step can be performed by milling in the manner such that the average particle size after heat treatment becomes preferably from 1 to 8 $\mu$m, and more preferably from 2 to 8 $\mu$m. That is, by the milling step, the carbonaceous material is prepared in the manner such that the average particle size of the resulting carbonaceous material is from 1 to 8 $\mu$m, and more preferably from 2 to 8 $\mu$m. Note that, in the present specification, "carbonaceous material precursor" or "intermediate product" refers to a raw material composition that has undergone de-tarring step. That is, in the present specification, "carbonaceous material precursor" and "intermediate product" are used in substantially the same meaning, and include milled products and unmilled products.

The mill used is not particularly limited, and a jet mill, a ball mill, a hammer mill, a rod mill, or the like, for example, can be used, but a jet mill equipped with a classification function is preferable from the perspective that there is minimal fine powder generation. On the other hand, when a ball mill, a hammer mill, a rod mill, or the like is used, fine powder can be removed by performing classification after milling.

Examples of classification include classification with a sieve, wet classification, and dry classification. An example of a wet classifier is a classifier utilizing a principle such as gravitational classification, inertial classification, hydraulic classification, or centrifugal classification. In addition, an example of a dry classifier is a classifier utilizing a principle such as sedimentation classification, mechanical classification, or centrifugal classification.

In the milling step, milling and classification can be performed with a single apparatus. For example, milling and classification can be performed using a jet mill equipped with a dry classification function. Furthermore, an apparatus with an independent miller and classifier can also be used. In this case, milling and classification can be performed continuously, but milling and classification may also be performed non-continuously.

Milled intermediate product (carbonaceous material precursor) can be heat treated by the heat treatment step. Since the milled intermediate product is contracted by approximately 0 to 20% depending on the condition of the heat treatment, milling is performed before the heat treatment. For cases where the heat treatment step is performed, the milled intermediate product is preferably prepared to have the average particle size that is approximately 0 to 20% greater than a final average particle size, in order to obtain a carbonaceous material for non-aqueous electrolyte secondary battery negative electrodes having the final average particle size $D_{v50}$ of 2 to 50 $\mu$m. The average particle size after the milling is not limited as long as the final average particle size of the obtained carbonaceous material is from 2 to 50 $\mu$m; however, specifically, the carbonaceous material is preferably prepared to have the average particle size $D_{v50}$ of 2 to 63 $\mu$m, more preferably 2 to 50 $\mu$m, even more preferably 2 to 38 $\mu$m, yet even more preferably 2 to 32 $\mu$m, and most preferably 3 to 25 $\mu$m. Furthermore, in order to obtain a carbonaceous material for non-aqueous electrolyte secondary battery negative electrodes having an average particle size $Dv_{50}$ of 1 to 8 $\mu$m after heat treatment, the carbonaceous material precursor to be milled is preferably prepared to have the average particle size that is approximately 0 to 20% greater. The average particle size after the milling is not limited as long as the final average particle size of the obtained carbonaceous material is from 2 to 8 $\mu$m; however, specifically, the carbonaceous material is preferably prepared to have the average particle size $D_{v50}$ of 1 to 10 $\mu$m, and more preferably 1 to 9 $\mu$m.

(Removal of fine powder)

The carbonaceous material of the present invention is preferably a carbonaceous material in which fine powder is removed. By removing fine powder, it is possible to enhance long-term durability of the secondary battery. Furthermore, irreversible capacity of the secondary battery can be also decreased.

The method of removing fine powder is not particularly limited. For example, fine powder can be removed using a milling device such as a jet mill having a classifying function in the milling step. On the other hand, when a milling device having no classifying function is used, fine powder can be removed by performing classification after milling. Furthermore, fine powder can be collected using a cyclone filter or a bag filter after the milling or after the classification.

5. Heat treatment step

In the production method of the present invention, the heat treatment step is a step for heat treatment a milled intermediate material at 1000°C to 1500°C in a non-oxidizing gas atmosphere. In the technical field of the present invention, heat treating at 1000°C to 1500°C is a heat treatment typically called "final heat treatment". In the heat treatment step of the present invention, a pre-heat treatment can be performed prior to a final heat treatment as necessary.

In the production method of the present invention, the heat treatment can be performed in accordance with an ordinary heat treatment procedure, and a carbonaceous material for non-aqueous electrolyte secondary battery negative electrodes can be obtained by performing heat treatment. The heat treatment temperature is from 1000 to 1500°C. If the heat treatment temperature is less than 1000°C, a large amount of functional groups remain in the carbonaceous material, the value of H/C increases, and the irreversible capacity also increases due to a reaction with lithium. Therefore, it is not preferable. The lower limit of the heat treatment temperature in the present invention is 1000°C or higher, more preferably 1100°C or higher, and particularly preferably 1150°C or higher. On the other hand, when the heat treatment temperature exceeds 1500°C, the selective orientation of the carbon hexagonal plane increases, and the discharge capacity decreases, which is not preferable. The upper limit of the heat treatment temperature in the present invention is 1500°C or lower, more preferably 1450°C or lower, and particularly preferably 1400°C or lower.

The heat treatment is preferably performed in a non-oxidizing gas atmosphere. Examples of the non-oxidizing gas include helium, nitrogen, argon, and the like, and these may be used alone or as a mixture. Final heat treatment may also be performed in a gas atmosphere in which a halogen gas such as chlorine is mixed with the non-oxidizing gas described above. The supplied amount of gas (circulated amount) is not limited; however, the supplied amount of gas is 1 mL/min or greater, preferably 5 mL/min or greater, and even more preferably 10 mL/min or greater, per 1 g of the carbon precursor that has undergone de-mineralizing. Furthermore, the heat treatment can be performed under reduced pressure at a pressure of 10 kPa or less, for example. The heat treatment time is not particularly limited; however, the heat treatment can be performed for 0.05 to 10 hours, preferably from 0.05 to 3 hours, and more preferably from 0.05 to 1 hour, in terms of the retention time in which the temperature is maintained at 1000°C or greater. Furthermore, the milling step can be performed after the heat treatment.

(Pre-heat treatment)

In the production method of the present invention, pre-heat treatment can be performed. The pre-heat treatment is performed by heat treatment a carbon source at 300°C or higher but lower than 900°C, and preferably 500°C or higher but lower than 900°C. The pre-heat treatment removes volatile components that remain even after the de-tarring step, such as $CO_2$, CO, $CH_4$, and $H_2$, and a tar content, so that the generation of these components can be reduced and the burden of the furnace can be reduced in final heat treatment. That is, in addition to the de-tarring step, the $CO_2$, CO, $CH_4$, $H_2$, or tar content can be further removed by the pre-heat treatment. When the pre-heat treatment temperature is less than 500°C, de-tarring becomes insufficient, and the amount of tar or gas generated in the final heat treatment step after milling becomes large. This may adhere to the particle surface and cause a decrease in battery performance without being able to maintain the surface properties after milling, which is not preferable. On the other hand, when the pre-heat treatment temperature is 900°C or higher, the temperature exceeds the tar-generating temperature range, and the used energy efficiency decreases, which is not preferable. Furthermore, the generated tar causes a secondary decomposition reaction, and the tar adheres to the carbon precursor and causes a decrease in performance, which is not preferable.

The pre-heat treatment is performed in an inert gas atmosphere, and examples of the inert gas include nitrogen, argon, and the like. In addition, pre-heat treatment can be performed under reduced pressure at a pressure of 10 kPa or less, for example. The pre-heat treatment time is not particularly limited, but pre-heat treatment may be performed for 0.5 to 10 hours, for example, and is preferably performed for 1 to 5 hours. Furthermore, the milling step can be performed after the pre-heat treatment. The pre-heat treatment removes volatile components that remain even after the de-tarring step, such as $CO_2$, CO, $CH_4$, and $H_2$, and a tar content, so that the generation of these components can be reduced and the burden of the furnace can be reduced in final heat treatment.

(Heat treatment using halogen gas-containing non-oxidizing gas)

Heat treatment or pre-heat treatment of the present invention can be performed in a halogen gas-containing non-oxidizing gas. Examples of the halogen gas that is used include chlorine gas, bromine gas, iodine gas, and fluorine gas; however, chlorine gas is particularly preferable. Furthermore, substances such as $CCl_4$ and $CCl_2F_2$ that are capable of easily releasing halogen at high temperatures can be supplied using an inert gas as a carrier.

The heat treatment or pre-heat treatment using the halogen gas-containing non-oxidizing gas can be performed at a temperature of final heat treatment (1000 to 1500°C); however, the heat treatment or pre-heat treatment can be also performed at a temperature lower than the final heat treatment (e.g. 300°C to 1000°C). The temperature range is preferably from 800 to 1400°C. The lower limit of the temperature is preferably 800°C, and more preferably 850°C. The upper limit of the temperature is preferably 1400°C, more preferably 1350°C, and most preferably 1300°C.

By, when carbonizing the raw organic material by heating, carbonizing a raw organic material via a step of heating the raw organic material in an atmosphere containing halogen gas such as chlorine gas, the resulting carbonaceous material will have adequate halogen content and, furthermore, a microstructure that is suitable for doping lithium. Thereby, large charge/discharge capacities can be achieved. For example, compared to the case where heat treatment was performed while supplying nitrogen gas at 0.2 L/min, in the case where heat treatment was performed while supplying a mixed gas in which 0.04 L/min of chlorine gas has been added to 0.2 L/min of nitrogen gas, the discharging capacity was increased by 7% per 1 g of carbon precursor.

Although the halogen content in the carbonaceous material of the present invention that has been subjected to heat treatment using a halogen gas-containing non-oxidizing gas is not limited, the halogen content is from 50 to 10000 ppm, more preferably from 100 to 5000 ppm, and further preferably from 200 to 3000 ppm. Although the reason why a carbonaceous material for non-aqueous electrolyte secondary battery negative electrodes having large charge/discharge capacities can be obtained by performing heat treatment or pre-heat treatment using a halogen gas-containing non-oxidizing gas is not clear, it is conceived that this is because a halogen and a hydrogen atom in the carbonaceous material react and carbonization proceeds in a state in which hydrogen has been rapidly removed from the carbonaceous material. Halogen gas is also conceived to react with minerals contained in the carbonaceous material and exhibit effects that reduce remaining minerals. Note that, if the halogen content contained in the carbonaceous material is too low, hydrogen cannot be sufficiently removed in the process of the production and, as a result, charge/discharge capacities may not be sufficiently enhanced. On the other hand, if the halogen content contained in the carbonaceous material is too high, it is possible to cause a problem of increasing irreversible capacity due to the remaining halogen being reacted with lithium in the battery.

Therefore, the present invention relates to a method of producing a carbonaceous material for non-aqueous electrolyte secondary batteries; the method comprising: the liquid phase de-mineralizing step (1), the de-tarring step (3), the milling step (4), and the heat treatment step (5); and the heat treatment is performed in an inert gas containing a halogen gas. Preferably, the method of the present invention may contain the oxidizing step (2).

«Production method of intermediate product»

The method of producing an intermediate product (carbonaceous material precursor) of the present invention comprises: a step of de-mineralizing a raw material composition having the average particle size of 100 $\mu$m or greater (de-mineralizing step); and a step of de-tarring the de-mineralized raw material composition at 300 to 1000°C (de-tarring step). The method may, preferably, further comprise a step of milling the de-mineralized raw material composition (milling step), and/or an oxidizing step in which the de-mineralized raw material is heated at 200 to 400°C in an oxidizing gas atmosphere. Furthermore, the de-mineralizing step is preferably a liquid phase de-mineralizing step, and the liquid phase de-mineralization is preferably performed at a temperature of 0°C or higher but lower than 80°C.

The de-mineralizing step, the oxidizing step, the de-tarring step, and the milling step are the same as the de-mineralizing step, the oxidizing step, the de-tarring step, and the milling step of the method of producing a carbonaceous material for non-aqueous electrolyte secondary battery negative electrodes of the present invention. In the method of producing an intermediate product of the present invention, the milling step can be performed after the de-mineralizing step or after the de-tarring step.

[2] Carbonaceous material for non-aqueous electrolyte secondary battery negative electrodes

The carbonaceous material for non-aqueous electrolyte secondary battery negative electrodes of the present invention can be obtained by the method of producing a carbonaceous material for non-aqueous electrolyte secondary battery negative electrodes. However, the carbonaceous material for non-aqueous electrolyte secondary battery negative electrodes of the present invention include a carbonaceous material that is produced by a method other than the method of producing a carbonaceous material for non-aqueous electrolyte secondary battery negative electrodes.

The carbonaceous material for non-aqueous electrolyte secondary battery negative electrodes of the present invention is a carbonaceous material obtained by carbonizing a plant-based organic material (in particular, extraction residue of roasted plants such as roasted coffee beans). The carbonaceous material has an atom ratio (H/C) of hydrogen atoms to carbon atoms determined by elemental analysis of 0.1 or less, an average particle size $D_{v50}$ of 2 to 50 $\mu$m, an average interlayer spacing of (002) plane determined by powder X-ray diffraction of 0.365 nm to 0.400 nm, a content of potassium element of 0.5 mass% or less, and a content of calcium element of 0.02 mass% or less. The carbonaceous material for non-aqueous electrolyte secondary battery negative electrodes of the present invention preferably has a ratio ($\rho_H/\rho_{Bt}$) of the true density determined by a pycnometer method using butanol ($\rho_{Bt}$) to the true density determined by a dry density measurement method using helium ($\rho_H$) of 1.18 to 1.38. Furthermore, the carbonaceous material for non-aqueous electrolyte secondary battery negative electrodes of the present invention preferably has the average particle size $Dv_{50}$ of 2 to 8 $\mu$m.

The above-described carbonaceous material of the present invention is a carbonaceous material whose carbon source is a plant-based organic material (in particular, extraction residue of roasted plants such as roasted coffee beans) and, thus, is a non-graphitizable carbonaceous material. The non-graphitizable carbon cause small expansion and contraction of particles when subjected to doping and de-doping reaction of lithium, and has high cycle durability.

The average particle size (volume average particle size: $D_{v50}$) of the carbonaceous material of the present invention is preferably from 2 to 50 $\mu$m. When the average particle size is less than 2 $\mu$m, the specific surface area increases due to increase in fine powder, and the irreversible capacity, which is a capacity that is charged but not discharged, also increases due to increase in reactivity with the electrolyte solution, thereby increasing the proportion of wasted positive electrode capacity. Thus, this is not preferable. In addition, when producing a negative electrode, each cavity formed between the carbonaceous materials becomes small, and the movement of lithium in the electrolyte solution is suppressed, which is not preferable. The lower limit of the average particle size is preferably 2 $\mu$m or greater,

more preferably 3 μm or greater, and particularly preferably 4 μm or greater. On the other hand, when the average particle size is 50 μm or less, the diffusion free path of lithium within particles decreases, which makes it possible to charge and discharge rapidly. Furthermore, in the case of a lithium-ion secondary battery, increasing the electrode area is important for improving the input/output characteristics, so it is necessary to reduce the coating thickness of the active material on the current collector at the time of electrode preparation. In order to reduce the coating thickness, it is necessary to reduce the particle size of the active material. From this perspective, the upper limit of the average particle size is preferably 50 μm or less, more preferably 40 μm or less, even more preferably 30 μm or less, yet even more preferably 25 μm or less, and most preferably 20 μm or less.

(Removal of fine powder)

The carbonaceous material of the present invention is preferably a carbonaceous material in which fine powder is removed. When a carbonaceous material in which fine powder is removed is used as a negative electrode of a non-aqueous electrolyte secondary battery, irreversible capacity decreases and charge/discharge efficiency will be enhanced. In the case of using a carbonaceous material containing a little amount of fine powder, active materials can be sufficiently adhered even when using a little amount of a binder. That is, a carbonaceous material containing a large amount of fine powder cannot sufficiently adhere fine powders, and this may lead to poor long-term durability.

The amount of the fine powder contained in the carbonaceous material of the present invention is not particularly limited; however, for cases where the average particle size is from 2 to 50 μm, a proportion of particles of 1 μm or less is preferably 2% by volume or less, more preferably 1% by volume or less, and even more preferably 0.5% by volume or less. When a carbonaceous material in which the proportion of particles of 1 μm or less is greater than 2% is used, irreversible capacity of the obtained battery will be large, and cycle durability may be poor. Furthermore, for cases where the average particle size is from 1 to 8 μm (preferably, the average particle size of 2 to 10 μm), although it is not limited, the proportion of the particles of 1 μm or less is preferably 10% by volume or less, more preferably 8% by volume or less, and even more preferably 6% by volume or less. When a carbonaceous material in which the proportion of particles of 1 μm or less is greater than 10% by volume is used, irreversible capacity of the obtained battery will be large, and cycle durability may be poor.

Using a carbonaceous material having an average particle size of 10 μm, when the charge capacity/irreversible capacity of a secondary battery produced by using a carbonaceous material containing 0.0% by volume of fine powder of 1 μm or less, and the charge capacity/irreversible capacity of a secondary battery produced by using a carbonaceous material containing 2.8% by volume of fine powder of 1 μm or less were compared, the results were 444/57 (mAh/g) and 454/77 (mAh/g), respectively. It was found that irreversible capacity decreases by reducing fine powder.

The plant-based organic material contains alkali metals (e.g. potassium and sodium), alkaline earth metals (e.g. magnesium and calcium), transition metals (e.g. iron and copper), and other elements, and the content of these metals are preferably reduced. This is because, if the plant-based organic material contains these metals, it is highly possible that impurities leach out from the negative electrode into the electrolyte solution during de-doping and negatively affect the battery performances and safety.

The content of potassium element in the carbonaceous material of the present invention is 0.5 mass% or less, more preferably 0.2 mass% or less, and even more preferably 0.1 mass% or less. In a non-aqueous electrolyte secondary battery using a carbonaceous material for negative electrodes having the potassium content exceeding 0.5 mass%, decrease in de-doping capacity and increase in irreversible capacity may occur.

The content of calcium in the carbonaceous material of the present invention is 0.02 mass% or less, more preferably 0.01 mass% or less, and even more preferably 0.005 mass% or less. In a non-aqueous electrolyte secondary battery using a carbonaceous material for negative electrodes having a large calcium content, heat build-up may be caused by minute short-circuit. Furthermore, doping characteristics and de-doping characteristics may also be negatively affected.

Although the halogen content in the carbonaceous material of the present invention that has been subjected to heat treatment using a halogen gas-containing non-oxidizing gas is not limited, the halogen content is from 50 to 10000 ppm, more preferably from 100 to 5000 ppm, and further preferably from 200 to 3000 ppm.

The H/C ratio of the carbonaceous material of the present invention was determined by measuring hydrogen atoms and carbon atoms by elemental analysis. Since the hydrogen content of the carbonaceous material decreases as the degree of carbonization increases, the H/C ratio tends to decrease. Therefore, the H/C ratio is effective as an index expressing the degree of carbonization. Although the H/C ratio of the carbonaceous material of the present invention is not limited, the H/C ratio is 0.1 or less and more preferably 0.08 or less. The H/C ratio is particularly preferably 0.05 or less. When the H/C ratio of hydrogen atoms to carbon atoms exceeds 0.1, the amount of functional groups present in the carbonaceous material increases, and the irreversible capacity can increase due to a reaction with lithium. Therefore, this is not preferable.

The average interlayer spacing of the (002) plane of a carbonaceous material indicates a value that decreases as the crystal integrity increases. The spacing of an ideal graphite structure yields a value of 0.3354 nm, and the value tends to increase as the structure is disordered. Therefore, the average interlayer spacing is effective as an index indicating the carbon structure. The average interlayer spacing of (002) plane determined by X-ray diffraction using the carbonaceous material for non-aqueous electrolyte secondary batteries of the present invention is 0.365 nm or greater, more preferably 0.370 nm or greater, and even more preferably 0.375 nm or greater. Similarly, the average interlayer spacing above is 0.400 nm or less, preferably 0.395 nm or less, and more preferably 0.390 nm or less. If the interlayer spacing of (002) plane is less than 0.365 nm, when the carbonaceous material is used as a negative electrode of a non-aqueous electrolyte secondary battery, doping capacity will be small, which is not preferable. Furthermore, if the interlayer spacing of (002) plane exceeds 0.400 nm, irreversible capacity will be large, which is not preferable.

The true density of a graphitic material having an ideal structure is 2.2 $g/cm^3$, and the true density tends to decrease as the crystal structure becomes disordered. Therefore, the true density can be used as an index expressing the carbon structure. The true density of the carbonaceous material of the present invention is not limited; however, the true density is preferably 1.44 $g/cm^3$ or greater but 1.65 $g/cm^3$ or less.

In particular, the true density in the case where oxidation treatment is performed before de-tarring is 1.44 $g/cm^3$ or greater but less than 1.54 $g/cm^3$. The lower limit thereof is more preferably 1.47 $g/cm^3$ or greater, and even more preferably 1.50 $g/cm^3$ or greater. The upper limit thereof is preferably 1.53 $g/cm^3$ or less, and more preferably 1.52 $g/cm^3$ or less. When the carbonaceous material is used in a battery, if the true density is less than 1.54 $g/cm^3$, cycle characteristics at high temperatures will be excellent. If the true density is 1.44 $g/cm^3$ or greater, electrode density will be high and thus volume energy density of the battery will be enhanced.

Furthermore, the true density in the case where oxidation treatment is not performed before de-tarring is 1.54 $g/cm^3$ or greater, more preferably 1.55 $g/cm^3$ or greater, and even more preferably 1.56 $g/cm^3$ or greater. A carbonaceous material having the true density of 1.54 $g/cm^3$ or greater will have less closing pores and irreversible capacity will decrease. Furthermore, electrode density will be high and thus volume energy density will be enhanced.

(Specific surface area of carbonaceous material)

The specific surface area (hereinafter, also referred to as "SSA") determined by the BET method using a nitrogen adsorption of the carbonaceous material of the present invention is 13 $m^2/g$ or less, preferably 12 $m^2/g$ or less, and more preferably 10 $m^2/g$ or less. When a carbonaceous material having the SSA of greater than 13 $m^2/g$ is used, irreversible capacity of the obtained battery increases, which is not preferable. Furthermore, the specific surface area is 1 $m^2/g$ or greater, preferably 1.5 $m^2/g$ or greater, and more preferably 2 $m^2/g$ or greater. When a carbonaceous material having the SSA of less than 1 $m^2/g$ is used, discharging capacity of the battery can be small, which is not preferable.

[3] Non-aqueous electrolyte secondary battery negative electrode

The non-aqueous electrolyte secondary battery negative electrode of the present invention comprises the carbonaceous material for non-aqueous electrolyte secondary battery negative electrodes of the present invention.

(Method of producing negative electrode)

The method of producing a negative electrode for non-aqueous electrolyte secondary batteries of the present invention comprises the steps of the method of producing a carbonaceous material for non-aqueous electrolyte secondary batteries; and a step of producing a negative electrode for non-aqueous electrolyte secondary batteries using the carbonaceous material for non-aqueous electrolyte secondary batteries.

The negative electrode that uses the carbonaceous material of the present invention can be produced by adding a binder to the carbonaceous material, adding appropriate amount of suitable solvent, kneading to form an electrode mixture, subsequently, coating the electrode mixture on a collector formed from a metal plate or the like and drying, and then pressure-forming. An electrode having high conductivity can be produced by using the carbonaceous material of the present invention without particularly adding a conductivity agent, but a conductivity agent may be added as necessary when preparing the electrode mixture for the purpose of imparting even higher conductivity. As the conductivity agent, conductive carbon black, vapor-grown carbon fibers (VGCF), nanotubes, or the like can be used. The added amount of the conductivity agent differs depending on the type of the conductivity agent that is used, but when the added amount is too small, the expected conductivity cannot be achieved, which is not preferable. Conversely, when the added amount is too large, dispersion of the conductivity agent in the electrode mixture becomes poor, which is not preferable. From this perspective, the proportion of the added amount of the conductivity agent is preferably from 0.5 to 10 mass% (here, it is assumed that the amount of the active material (carbonaceous material) + the amount of the binder + the amount of the conductivity agent = 100 mass%), more preferably from 0.5 to 7 mass%, and particularly preferably from 0.5 to 5 mass%.

The binder is not particularly limited as long as the binder does not react with an electrolyte solution such as a mixture of polyvinylidene fluoride (PVDF), polytetrafluoroethylene, and styrene-butadiene rubber (SBR), and carboxymethyl cellulose (CMC). Of these, PVDF is preferable since the PVDF attached on the surface of an active material does not inhibit migration of lithium-ions and excellent input/output characteristics is achieved. In order to form a slurry by dissolving PVDF, a polar solvent such as N-methylpyrrolidone (NMP) can be preferably used; however, aqueous emulsion, such as SBR, or CMC can be also used by dissolving in water. When the added amount of the binder is too large, since the resistance of the resulting electrode becomes large, the internal resistance of the battery becomes large. This diminishes the battery characteristics, which is not preferable. When the added amount of the binder is too small, the bonds between the negative electrode material particles and the bonds between the negative electrode material particles and the current collector become insufficient, which is not preferable.

Preferable amount of the binder that is added differs depending on the type of the binder that is used; however, the amount of binder is, when a PVDF-based binder is used, preferably from 3 to 13 mass%, and more preferably from 3 to 10 mass%. On the other hand, when using a binder that uses water as a solvent, a plurality of binders is often mixed for use (e.g. a mixture of SBR and CMC). The total amount of all the binders that are used is preferably from 0.5 to 5 mass%, and more preferably from 1 to 4 mass%. The electrode active material layer is typically formed on both sides of the current collector, but the layer may be formed on one side as necessary. The required current collectors or separators becomes shorter as the thickness of the electrode active material layer increases, which is preferable for increasing capacity. However, it is more advantageous from the perspective of improving the input/output characteristics for the electrode area of opposite electrodes to be wider, so when the active material layer is too thick, the input/output characteristics are diminished, which is not preferable. The thickness of the active material layer (on each side) is preferably from 10 to 80 $\mu$m, more preferably from 20 to 75 $\mu$m, and particularly preferably from 20 to 60 $\mu$m.

[4] Non-aqueous Electrolyte Secondary Battery

The non-aqueous electrolyte secondary battery of the present invention comprises the non-aqueous electrolyte secondary battery negative electrode of the present invention. A non-aqueous electrolyte secondary battery using the negative electrode for non-aqueous electrolyte secondary batteries using the carbonaceous material of the present invention can guarantee high reliability due to low amount of impurities. Furthermore, the non-aqueous electrolyte secondary battery of the present invention exhibits excellent output characteristics and cycle characteristics.

(Method of producing non-aqueous electrolyte secondary battery)

The method of producing a non-aqueous electrolyte secondary battery of the present invention comprises the steps of the method of producing a negative electrode for non-aqueous electrolyte secondary batteries; and a step of producing a non-aqueous electrolyte secondary battery using the negative electrode for non-aqueous electrolyte secondary batteries.

When a negative electrode for a non-aqueous electrolyte secondary battery is formed using the negative electrode material of the present invention, the other materials constituting the battery such as a positive electrode material, a separator, and an electrolyte solution are not particularly limited, and various materials that have been conventionally used or proposed for non-aqueous solvent secondary batteries can be used.

For example, layered oxide-based (as represented by $LiMO_2$, where M is a metal such as $LiCoO_2$, $LiNiO_2$, $LiMnO_2$, or $LiNi_xCo_yMo_zO_2$ (where x, y, and z represent composition ratios)), olivine-based (as represented by $LiMPO_4$, where M is a metal such as $LiFePO_4$), and spinel-based (as represented by $LiM_2O_4$, where M is a metal such as $LiMn_2O_4$) complex metal chalcogen compounds are preferable as positive electrode materials, and these chalcogen compounds may be mixed as necessary. A positive electrode is formed by coating these positive electrode materials with an appropriate binder together with a carbonaceous material for imparting conductivity to the electrode and forming a layer on a conductive current collector.

A non-aqueous solvent electrolyte solution used with this positive electrode and negative electrode combination is typically formed by dissolving an electrolyte in a non-aqueous solvent. As the non-aqueous solvent, for example, one type or a combination of two or more types of organic solvents, such as propylene carbonate, ethylene carbonate, dimethyl carbonate, diethyl carbonate, dimethoxy ethane, diethoxy ethane, $\gamma$-butyl lactone, tetrahydrofuran, 2-methyltetrahydrofuran, sulfolane, and 1,3-dioxolane. Furthermore, $LiClO_4$, $LiPF_6$, $LiBF_4$, $LiCF_3SO_3$, $LiAsF_6$, LiCl, LiBr, LiB $(C_6H_5)_4$, $LiN(SO_3CF_3)_2$ and the like can be used as an electrolyte. Secondary battery is typically formed by immersing, in an electrolyte solution, a positive electrode layer and a negative electrode layer, which are produced as described above, that are arranged facing each other via, as necessary, a liquid permeable separator formed from nonwoven fabric and other porous materials. As a separator, a liquid permeable separator formed from nonwoven fabric and other porous materials that is typically used in secondary batteries can be used. Alternatively, in place of a separator or together with a separator, a solid electrolyte formed from polymer gel in which an electrolyte solutions is impregnated can be also used.

[5] Vehicle

The lithium-ion secondary battery of the present invention is suitable for a battery that is mounted on vehicles such as automobiles (typically, lithium-ion secondary battery for driving vehicle).

The method of producing a vehicle of the present invention comprises the steps of the method of producing a non-aqueous electrolyte secondary battery; and a step of mounting the non-aqueous electrolyte secondary battery.

"Vehicle" in the present invention can be, without any particular limitations, a vehicle known as a typical electric vehicle, a hybrid vehicle of a fuel cell and an internal-combustion engine, or the like; however, the vehicle in the present invention is a vehicle that comprises at least: a power source device provided with the battery described above, a motor driving mechanism driven by the power supply from the power source device, and a control device that controls this. Furthermore, the vehicle may comprise a mechanism having a dynamic braking and/or a regenerative brake that charges the lithium-ion secondary battery by converting the energy generated by braking into electricity.

EXAMPLES

The present invention will be described in detail hereinafter using working examples, but these working examples do not limit the scope of the present invention.

Hereinafter, the measurement methods for the carbonization yield of roasted coffee beans, L value, and values for physical properties of the carbonaceous material for non-aqueous electrolyte secondary batteries of the present invention ("average particle size as determined by laser diffraction", "atom ratio (H/C) of hydrogen/carbon", "specific surface area", "true density determined by pycnometer method using butanol ($\rho_{Bt}$; hereinafter, referred to as "butanol method")", "average interlayer spacing (spacing of d(002) plane) as determined by X-ray diffraction", and "mineral content"). The values for the physical properties that are described in the present specification, including EXAMPLES, are based on the value determined by the following methods.

(Extraction/de-mineralization yield)

A de-mineralized residue obtained by subjecting coffee beans, as raw materials, to extracting and de-mineralizing steps was dried in a dryer using an $N_2$ stream at 100°C for 8 hours or longer. The mass of the de-mineralized residue after the drying relative to the mass of the raw material was used as the extraction/de-mineralization yield.

(Carbonization yield)

The carbonization yield was measured using a sample which was formed by drying the residue after extraction and de-mineralization. As a device, DTG-60H manufactured by Shimadzu Corporation was used. In a Pt pan, 20 mg of sample was placed. As a reference, alumina powder was used. $N_2$ was circulated at 200 mL/min, and first, after removing adhered moisture by maintaining at 150°C for 30 minutes, the temperature of the device was increased up to 1000°C at 10°C/min. The mass of the sample at 1000°C relative to the mass of the sample at the point where the maintaining at 150°C ended was used as the carbonization yield.

(L value)

A color meter (ZE6000, manufactured by Nippon Denshoku Industries Co., Ltd.) was used to measure the L value. In a glass petri dish with a diameter of 30 mm, 1 g of milled roasted coffee beans (milled to about 1 to 2 mm) was placed and measured by reflectance method. Here, color space of the L value was calculated using Hunter Lab color space described below, which is proposed by R.S. Hunter.

$L = 10Y^{1/2}$
$a = 175(100X/Xn-Y)/L$
$b = 70(Y-100Z/Zn)/L$
L: lightness index in Hunter Lab color space
a, b: color-coordinates in Hunter Lab color space
X, Y, Z: tristimulus values in trichromatic system in accordance with JIS Z8701

(Average particle size)

Three drops of a dispersant (cationic surfactant, "SN-WET 366" (manufactured by San Nopco Limited)) were added to approximately 0.01 g of a sample, and the dispersant was blended into the sample. Next, 30 mL of pure water was added, and after the pure water was dispersed for approximately 2 minutes with an ultrasonic washer, the particle size distribution within the particle size range of 0.5 to 3000 μm was determined with a particle size distribution measurement device ("SALD-3000S" manufactured by the Shimadzu Corporation). The refractive index of the particle was assumed to be 2.0 to 0.1i. The average particle size $D_{v50}$ (μm) was determined from the resulting particle size distribution as the particle size yielding a cumulative volume of 50%.

(Atom ratio of hydrogen/carbon (H/C))

The atom ratio was measured in accordance with the method prescribed in JIS M8819. That is, each of the mass proportions of hydrogen and carbon in a sample obtained by elemental analysis using a CHN analyzer (2400II manufactured by Perkin Elmer Inc.) was divided by the mass of each element, and then the ratio of the numbers of hydrogen/carbon atoms was determined.

(Specific surface area)

The specific surface area (SSA) was measured in accordance with the method stipulated in JIS Z8830. A summary is given below. A value $v_m$ was determined by a one-point method (relative pressure x = 0.2) based on nitrogen adsorption at the temperature of liquid nitrogen using the approximation $v_m$ = 1 / (v (1-x)) derived from the BET equation, and the specific surface area of the sample was calculated from the following formula:

$$\text{Specific surface area (SSA)} = 4.35 \times vm \ (m^2/g)$$

(Here, $v_m$ is the amount of adsorption ($cm^3$/g) required to form a monomolecular layer on the sample surface; v is the amount of adsorption ($cm^3$/g) actually measured, and x is the relative pressure).

Specifically, the amount of adsorption of nitrogen in the carbonaceous substance at the temperature of liquid nitrogen was measured as follows using a "Flow Sorb II 2300" manufactured by Micromeritics. A test tube was filled with the carbonaceous material, and the test tube was cooled to -196°C while infusing helium gas containing nitrogen gas at a concentration of 20 mol% so that the nitrogen was adsorbed in the carbonaceous material. Next, the test tube was returned to room temperature. The amount of nitrogen desorbed from the sample at this time was measured with a thermal conductivity detector and used as the adsorption gas amount v.

(Mineral content)

In order to measure the potassium element content and the calcium content, a carbon sample containing predetermined amounts of potassium element and calcium element is prepared in advance, and then calibration curves showing the relationship between the intensity of Kα line of potassium and the potassium content, and the relationship between the intensity of Kα line of calcium and the calcium content were created using an X-ray fluorescence spectrometer. Then, the intensity of the Kα line of potassium of the sample was measured via X-ray fluorescence analysis. Using the calibration curves created in advance, content of potassium and content of calcium were determined.

The X-ray fluorescence analysis was performed using LAB CENTER XRF-1700, manufactured by Shimadzu Corporation, under the following conditions. A holder for irradiating from upper part was used, and the measured area of the sample was within a circumferential line having the diameter of 20 mm. In a polyethylene container having the inner diameter of 25 mm, 1.0 g of a sample to be measured after de-mineralization was placed, the back side thereof was covered with a plankton net and the measurement surface thereof was covered with a polypropylene film in order to set the sample to be measured, and then the measurement was performed. The X-ray source was set to 40 kV and 60 mA. Potassium was measured using an LiF(200) as an analyzing crystal and a gas flow proportional counter as a detector, in a range of 2θ of 90 to 140°, at a scanning rate of 8°/min. Calcium was measured using an LiF (200) as an analyzing crystal and a scintillation counter as a detector, in a range of 2θ of 56 to 60°, at a scanning rate of 8°/min.

(True density)

Measurements were performed using butanol in accordance with the method stipulated in JIS R7212. A summary is given below. The mass ($m_1$) of a pycnometer with a bypass line having an internal volume of approximately 40 mL was precisely measured. Next, after a sample was placed flat at the bottom of the pycnometer so as to have a thickness of approximately 10 mm, the mass ($m_2$) was precisely measured. Next, 1-butanol was slowly added to the pycnometer to a depth of approximately 20 mm from the bottom. Next, the pycnometer was gently oscillated, and after it was confirmed that no large air bubbles were formed, the pycnometer was placed in a vacuum desiccator and gradually evacuated to a pressure of 2.0 to 2.7 kPa. The pressure was maintained for 20 minutes or longer, and after the generation of air bubbles stops, the pycnometer was removed and further filled with 1-butanol. After a stopper was inserted, the pycnometer was immersed in a constant-temperature water bath (adjusted to $3.0\pm0.03°C$) for at least 15 minutes, and the liquid surface of 1-butanol was aligned with the marked line. Next, the pycnometer was removed, and after the outside of the pycnometer was thoroughly wiped and the pycnometer was cooled to room temperature, the mass ($m_4$) was precisely measured. Next, the same pycnometer was filled with 1-butanol and immersed in a constant-temperature water bath in the same manner as described above. After the marked line was aligned, the mass ($m_3$) was measured. In addition, distilled water which was boiled immediately before use and from which the dissolved gas was removed was placed in the pycnometer and immersed in a constant-temperature water bath in the same manner as described above. After the marked line was aligned, the mass ($m_5$) was measured. The true density ($\rho_B$) was calculated using the following formula, and this was used as $\rho_{Bt}$.

[Formula 1]

$$\rho_B = \frac{m_2 - m_1}{m_2 - m_1 - (m_4 - m_3)} \times \frac{m_3 - m_1}{m_5 - m_1} d$$

(Here, d is the specific gravity (0.9946) in water at 30°C)

(Average interlayer spacing $d_{002}$ of carbonaceous material)

A sample holder was filled with a carbonaceous material powder, and measurements were performed with a symmetrical reflection method using an X'Pert PRO made by the PANalytical B.V. Under conditions with a scanning range of $8<2\theta<50°$ and an applied current/applied voltage of 45 kV/40 mA, an X-ray diffraction pattern was obtained using CuK$\alpha$ rays ($\lambda$=1.5418 Å) monochromated by an Ni filter as a radiation source. The correction was performed by using the diffraction peak of the (111) surface of a high-purity silicon powder serving as a standard substance. The wavelength of the CuK$\alpha$ rays was set to 0.15418 nm, and $d_{002}$ was calculated by Bragg's equation.

(Working Examples 1 to 4 and Comparative Examples 1 to 4)

Coffee, used as the raw material, and L values thereof are shown in Table 1. Extraction was performed by using water, at 98°C, having a mass that is 15 times the mass of the coffee beans. The residue after extracting coffee was carbonized according to the method described below. In 100 g of coffee residue after extraction, 300 g of 1% hydrochloric acid was added, stirred for 1 hour at 20°C, and then filtered. Next, de-mineralizing treatment was performed by repeating, for 3 times, a water washing operation in which 300 g of water at room temperature was added to the mixture and stirred for 1 hour, and then the mixture was filtered to obtain a de-mineralized coffee extraction residue. After drying the obtained de-mineralized coffee extraction residue in a nitrogen gas atmosphere, the sample was subjected to de-tarring at 700°C, and a carbonaceous material precursor was prepared. This was milled using a rod mill to obtain carbon precursor microparticles. Then, this carbon precursor was subjected to final heat treatment at 1250°C for 1 hour to obtain a carbonaceous material having an average particle size of 10 $\mu$m. Yield after de-mineralization and final yield are shown in Table 1. Characteristics of the obtained carbonaceous material are shown in Table 2.

When a coffee bean extraction residue having the L value of less than 18 was used, yield of the resulting carbonaceous material became higher. It is conceived that this is because, due to the roasting, an oxygen-containing functional group in which a terminal of the ring structure of the component in the coffee is oxidized and an oxygen atom is added to the terminal is produced, and then an aromatic compound is produced as a cyclization reaction proceeds during a heat treatment step and, simultaneously, a crosslinked structure having the oxygen-containing functional group as a starting point is produced. Because of this effect, the yield of the carbonaceous material obtained from a plant-based organic material that was roasted is increased. Furthermore, when the extraction residue having the L value of 18 or less is used, compared to the case where the extraction residue that does not have the L value of 18 or less is used, more alkali metals such as potassium element are removed by de-mineralization.

[Table 1]

|  | Raw material | L | Extraction/de-mineralization yield [%] | Carbonization yield [%] | Final yield [%] | Heat treatment temperature [°C] |
|---|---|---|---|---|---|---|
| Working Example 1 | Blended | 17.8 | 70.3 | 25.1 | 17.6 | 1250 |
| Working Example 2 | Brazil | 15.4 | 72.1 | 23.7 | 17.1 | 1250 |
| Working Example 3 | Brazil | 18.0 | 71.0 | 22.6 | 16.0 | 1250 |
| Working Example 4 | Vietnam | 16.4 | 68.1 | 27.3 | 18.6 | 1250 |
| Comparative Example 1 | Brazil, unprocessed beans | 67.3 | 59.4 | 19.7 | 11.7 | 1250 |
| Comparative Example 2 | Brazil | 44.3 | 59.3 | 23.0 | 13.6 | 1250 |
| Comparative Example 3 | Brazil | 31.1 | 63.4 | 22.1 | 14.0 | 1250 |
| Comparative Example 4 | Brazil | 19.4 | 70.5 | 22.1 | 15.6 | 1250 |

[Table 2]

|  | K component after de-mineralization [ppm] | $\rho_{Bt}$ [g/cm$^3$] | $Dv_{50}$ [$\mu$m] | SSA [m$^2$/g] | H/C | $d_{002}$ [nm] |
|---|---|---|---|---|---|---|
| Working Example 1 | N.D. | 1.57 | 9.8 | 6.2 | 0.02 | 0.378 |
| Working Example 2 | N.D. | 1.56 | 9.6 | 6.4 | 0.03 | 0.379 |
| Working Example 3 | N.D. | 1.57 | 10.5 | 6.0 | 0.02 | 0.378 |
| Working Example 4 | N.D. | 1.54 | 7.8 | 6.7 | 0.02 | 0.379 |
| Comparative Example 1 | 530 | - | - | - | - | - |
| Comparative Example 2 | 196 | - | - | - | - | - |
| Comparative Example 3 | 171 | 1.57 | 10.2 | 5.3 | - | - |
| Comparative Example 4 | 51 | 1.60 | 9.7 | 5.7 | 0.02 | 0.379 |

(Doping/de-doping test of active material)

Using the carbonaceous materials obtained in Working Examples 1 to 4 and Comparative Examples 1 to 4, the following operations (a) to (c) were performed to produce negative electrodes and non-aqueous electrolyte secondary batteries. Electrode performance was evaluated. The battery characteristics are shown in Table 3.

(a) Production of electrode

NMP was added to 94 parts by mass of the carbonaceous material and 6 parts by mass of polyvinylidene fluoride (KF#9100, manufactured by Kureha Corporation) and formed into a paste and then applied uniformly to copper foil. After the sample was dried, the sample was punched from the copper foil into a disc shape with a diameter of 15 mm, and pressed to obtain an electrode. The amount of the carbonaceous material in the electrode was adjusted to approximately 10 mg.

(b) Production of test battery

Although the carbonaceous material of the present invention is suitable for forming a negative electrode for a non-aqueous electrolyte secondary battery, in order to precisely evaluate the discharge capacity (de-doping capacity) and the irreversible capacity (non-de-doping capacity) of the battery active material without being affected by fluctuation in the performances of the counter electrode, a lithium secondary battery was formed using the electrode obtained above together with a counter electrode comprising lithium metal with stable characteristics, and the characteristics thereof were evaluated.

The lithium electrode was prepared inside a glove box in an Ar atmosphere. An electrode (counter electrode) was formed by spot-welding a stainless steel mesh disc with a diameter of 16 mm on the outer lid of a 2016-type coin test cell in advance, punching a thin sheet of metal lithium with a thickness of 0.8 mm into a disc shape with a diameter of 15 mm, and pressing the thin sheet of metal lithium into the stainless steel mesh disc.

Using a pair of electrodes produced in this way, $LiPF_6$ was added at a proportion of 1.5 mol/L to a mixed solvent prepared by mixing ethylene carbonate, dimethyl carbonate, and methyl ethyl carbonate at a volume ratio of 1:2:2 as an electrolyte solution. A polyethylene gasket was used as a fine porous membrane separator made of borosilicate glass fibers with a diameter of 19 mm to assemble a 2016 coin-type non-aqueous electrolyte lithium secondary battery in an Ar glove box.

(c) Measurement of battery capacity

Charge-discharge tests were performed on a lithium secondary battery with the configuration described above using a charge-discharge tester ("TOSCAT" manufactured by Toyo System Co., Ltd.). A lithium doping reaction for inserting lithium into the carbon electrode was performed with a constant-current/constant-voltage method, and a de-doping reaction was performed with a constant-current method. Here, in a battery using a lithium chalcogen compound for the positive electrode, the doping reaction for inserting lithium into the carbon electrode is called "charging", and in a battery using lithium metal for a counter electrode, as in the test battery of the present invention, the doping reaction for the carbon electrode is called "discharging". The manner in which the doping reactions for inserting lithium into the same carbon electrode thus differs depending on the pair of electrodes used. Therefore, the doping reaction for inserting lithium into the carbon electrode will be described as "charging" hereinafter for the sake of convenience. Conversely, "discharging" refers to a charging reaction in the test battery but is described as "discharging" for the sake of convenience since it is a de-doping reaction for removing lithium from the carbonaceous material. The charging method used here is a constant-current/constant-voltage method. Specifically, constant-current charging was performed at 0.5 mA/cm² until the terminal voltage reached 0 mV. After the terminal voltage reached 0 mV, constant-voltage charging was performed at a terminal voltage of 0 mV, and charging was continued until the current value reached 20 μA. At this time, a value determined by dividing the amount of electricity supplied by the mass of the carbonaceous material of the electrode is defined as the charge capacity per unit mass of the carbonaceous material (mAh/g). After the completion of charging, the battery circuit was opened for 30 minutes, and discharging was performed thereafter. Discharging was performed at a constant current of 0.5 mA/cm² until the final voltage reached 1.5 V. At this time, a value determined by dividing the amount of electricity discharged by the mass of the carbonaceous material of the electrode is defined as the discharge capacity per unit mass of the carbonaceous material (mAh/g). The irreversible capacity was calculated as the discharge capacity subtracted from the charge capacity. The charge/discharge capacities and irreversible capacity were determined by averaging 3 measurements for test batteries produced using the same sample. The battery characteristics are shown in Table 3.

[Table 3]

|  | Discharge capacity [mAh/g] | Irreversible capacity [mAh/g] |
|---|---|---|
| Working Example 1 | 464 | 74 |
| Working Example 2 | 459 | 74 |
| Working Example 3 | 467 | 75 |
| Working Example 4 | 469 | 78 |

From the results described above, when a roasted coffee extraction residue is used as a raw material, in particular when using a roasted coffee extraction residue having the L value of 18 or less, it was found that a highly pure carbonaceous material in which alkali metals such as potassium element and alkaline earth metals such as calcium element are sufficiently removed by de-mineralization can be produced at high yield, compared to the case where a roasted coffee extraction residue that does not have the L value of 18 or less is used.

(Working Examples 5 to 8 and Comparative Example 5)

Three types coffee residues were investigated: coffee bean A (L value = 15.4), B (L value = 19.4), and industrially obtained residue. Single coffee residues A and B were used as Comparative Examples 1 and 2, respectively. A 1:1 mixture of coffee residues A and B and a residue obtained from factory was used as a working example. The industrially obtained residue is a residue obtained after extracting coffee from a plurality of coffee bean mixtures. The particle size of these residues were all 1 mm. The L value of the investigated coffee residue mixtures and the like are shown in Table 4.

[Table 4]

| | Plant residue | Stage of mixing | Blend | L value before extraction (-) | Particle size of residue [mm] |
|---|---|---|---|---|---|
| Working Example 5 | Coffee A:Coffee B | Residue before extraction | 1:1 | 16.9 | 1 |
| Working Example 6 | Coffee A:Coffee B | Residue after extraction | 1:1 | (-) | 1 |
| Working Example 7 | Industrially obtained residue | Residue before extraction | Blended product | 17.8 | 1 |
| Working Example 8 | Coffee A (L value = 15.4) | - | Unblended | - | 1 |
| Comparative Example 5 | Coffee B (L value = 19.4) | - | Unblended | - | 1 |

In 100 g of coffee residue after extraction, 300 g of 1% hydrochloric acid (pH 0.5) was added, stirred for 1 hour at 20°C, and then filtered. De-mineralizing treatment was performed by repeating, for 3 times, a water washing operation in which 300 g of water at 20°C was added to the mixture and stirred for 1 hour, and then the mixture was filtered to obtain a de-mineralized coffee extraction residue. After drying the obtained de-mineralized coffee extraction residue in a nitrogen gas atmosphere, the sample was subjected to de-tarring at 700°C, and a carbonaceous material precursor was prepared. This was milled using a rod mill to obtain carbonaceous material precursor microparticles. Then, this carbonaceous material precursor microparticles were subjected to final heat treatment at 1250°C for 1 hour to obtain a carbonaceous material having an average particle size of 10 $\mu$m of working examples and a comparative example. Characteristics, such as ion content and particle size, of the obtained carbonaceous material are shown in Table 5.

[Table 5]

| | K amount [%] | Ca amount [%] | $Dv_{50}$ [$\mu$m] | SSA [$m^2$/g] | H/C [-] | $d_{002}$ [nm] | $\rho Bt$ [g/$cm^3$] |
|---|---|---|---|---|---|---|---|
| Working Example 5 | N.D. | N.D. | 10.4 | 5.1 | 0.01 | 0.377 | 1.57 |
| Working Example 6 | N.D. | N.D. | 10.1 | 5.6 | 0.01 | 0.377 | 1.57 |
| Working Example 7 | N.D. | N.D. | 10.1 | 5.2 | 0.01 | 0.377 | 1.57 |
| Working Example 8 | N.D. | N.D. | 7.8 | 6.7 | 0.01 | 0.378 | 1.54 |
| Comparative Example 5 | N.D. | N.D. | 9.7 | 5.7 | 0.01 | 0.376 | 1.60 |

(Doping/de-doping test of active material)

Using the carbonaceous materials obtained in Working Examples 5 to 8 and Comparative Example 5, the following (d) was performed in place of (a) of "Doping/de-doping test of active material" described above and the following operations (b) to (c) were further performed to produce negative electrodes and non-aqueous electrolyte secondary batteries. Electrode performance was evaluated. The battery characteristics are shown in Table 6.

(d) Production of electrode

NMP was added to 90 parts by mass of the carbonaceous material and 10 parts by mass of polyvinylidene fluoride (KF#1100, manufactured by Kureha Corporation) and formed into a paste and then applied uniformly to copper foil. After the sample was dried, the sample was punched from the copper foil into a disc shape with a diameter of 15 mm, and pressed to obtain an electrode. The amount of the carbonaceous material in the electrode was adjusted to approximately 10 mg.

[Table 6]

|  | Plant residue | Discharge capacity [mAh/g] | Irreversible capacity [mAh/g] |
|---|---|---|---|
| Working Example 5 | Coffee A:Coffee B | 460 | 73 |
| Working Example 6 | Coffee A:Coffee B | 462 | 75 |
| Working Example 7 | Industrially obtained residue | 464 | 74 |
| Working Example 8 | Coffee A | 467 | 81 |
| Comparative Example 5 | Coffee B | 447 | 72 |

The secondary batteries using the carbonaceous materials of Working Examples 5 to 7, in which two or more types of coffee residues were blended, all showed discharging capacity value of 460 mAh/g or greater and irreversible capacity value of 80 mAh/g or less, and exhibited excellent charge/discharge characteristics that is better than the charge/discharge performances assumed in the cases where single raw material is used.

Furthermore, the present specification discloses the following.

[1] A raw material composition for producing a carbonaceous material for non-aqueous electrolyte secondary battery negative electrodes, the raw material composition comprising a roasted coffee bean-derived organic material having an L value of 18.0 or less.

[2] A method of producing an intermediate product for producing a carbonaceous material for non-aqueous electrolyte secondary battery negative electrodes, the method comprising the steps of: de-mineralizing and de-tarring the raw material composition described in [1].

[3] The method according to [2], wherein the de-mineralizing step is performed by using an acidic solution.

[4] The method according to [2] or [3], the method further comprising a step of milling the de-mineralized raw material composition.

[5] A method of producing a carbonaceous material for non-aqueous electrolyte secondary battery negative electrodes, the method comprising the steps of: heat treatment the intermediate product produced according to the method described in [2] or [3] at 1000°C or higher but 1500°C or lower, and milling the intermediate product or a heat-treated product thereof.

[6] A method of producing a carbonaceous material for non-aqueous electrolyte secondary batteries, the method comprising a step of heat-treating the intermediate product produced according to the method described in [4] at 1000°C or higher but 1500°C or lower.

[7] A method of producing a negative electrode for non-aqueous electrolyte secondary batteries, the method comprising the steps of: producing a carbonaceous material for non-aqueous electrolyte secondary batteries according to the method described in [5] or [6], and producing a negative electrode for non-aqueous electrolyte secondary batteries using the carbonaceous material for non-aqueous electrolyte secondary batteries.

[8] A method of producing a non-aqueous electrolyte secondary battery, the method comprising the steps of: producing a negative electrode for non-aqueous electrolyte secondary batteries according to the method described in [7], and producing a non-aqueous electrolyte secondary battery using the negative electrode for non-aqueous electrolyte secondary batteries.

[9] A method of producing a vehicle, the method comprising the steps of: producing a non-aqueous electrolyte secondary battery according to the method described in [8], and mounting the non-aqueous electrolyte secondary battery.

Furthermore, the present specification discloses the following.

[1] A method of producing a raw material composition for producing a carbonaceous material for non-aqueous electrolyte secondary battery negative electrodes, the method uses an extraction residue of a blended product of roasted plants having different degree of roasting, or a blended product of extraction residues of roasted plants having different degree of roasting.

[2] The method according to [1], wherein the roasted plant is a roasted coffee bean.

[3] The method according to [2], wherein the blending of the roasted plants or the mixing of the extraction residues are performed in a manner such that an L value becomes 16 or greater but 19 or less.

[4] A method of producing an intermediate product for producing a carbonaceous material for non-aqueous electrolyte secondary battery negative electrodes, the method comprising the steps of: de-mineralizing and de-tarring the raw material composition produced according to the method described in any one of [1] to [3].

[5] The method according to [4], the method further comprising a step of milling the de-mineralized raw material composition.

[6] A method of producing a carbonaceous material for non-aqueous electrolyte secondary battery negative electrodes, the method comprising the steps of: heat-treating the intermediate product produced according to the method described in [4] at 1000°C or higher but 1500°C or lower, and milling the intermediate product or a heat-treated product thereof.

[7] A method of producing a carbonaceous material for non-aqueous electrolyte secondary batteries, the method comprising a step of heat-treating the intermediate product produced according to the method described in [5] at 1000°C or higher but 1500°C or lower.

[8] A method of producing a negative electrode for non-aqueous electrolyte secondary batteries, the method comprising the steps of: producing a carbonaceous material for non-aqueous electrolyte secondary batteries according to the method described in [6] or [7], and producing a negative electrode for non-aqueous electrolyte secondary batteries using the carbonaceous material for non-aqueous electrolyte secondary batteries.

[9] A method of producing a non-aqueous electrolyte secondary battery, the method comprising the steps of: producing a negative electrode for non-aqueous electrolyte secondary batteries according to the method described in [8], and producing a non-aqueous electrolyte secondary battery using the negative electrode for non-aqueous electrolyte secondary batteries.

[10] A method of producing a vehicle, the method comprising the steps of: producing a non-aqueous electrolyte secondary battery according to the method described in [9], and mounting the non-aqueous electrolyte secondary battery.

**Claims**

1. A raw material composition for producing a carbonaceous material for non-aqueous electrolyte secondary battery negative electrodes, the raw material composition comprising a roasted coffee bean-derived organic material having an L value of 18.0 or less.

2. The raw material composition for producing a carbonaceous material for non-aqueous electrolyte secondary battery negative electrodes according to claim 1, wherein the raw material composition is formed from a roasted coffee bean-derived organic material having an L value of 19.0 or less.

3. A raw material composition for producing a carbonaceous material for non-aqueous electrolyte secondary battery negative electrodes, the raw material composition comprising an extraction residue of a mixture of two or more roasted plants having different degree of roasting, or a mixture of two or more extraction residues of roasted plants having different degree of roasting.

4. The raw material composition according to claim 3, wherein the roasted plant is a roasted coffee bean.

5. The raw material composition according to claim 4, wherein an L value of the mixture of two or more roasted plants is 16 or greater but 19 or less.

6. A method of producing an intermediate product for producing a carbonaceous material for non-aqueous electrolyte secondary battery negative electrodes, the method comprising the steps of: de-mineralizing the raw material composition described in any one of claims 1 to 5, and de-tarring the de-mineralized raw material composition at 300°C or higher but 1000°C or lower.

7. The method of producing an intermediate product for producing a carbonaceous material for non-aqueous electrolyte secondary battery negative electrodes according to claim 6, wherein the de-mineralizing is performed by using an acidic solution.

8. The method of producing an intermediate product for producing a carbonaceous material for non-aqueous electrolyte secondary battery negative electrodes according to claim 6 or 7, the method further comprising a step of milling the de-mineralized raw material composition.

9. An intermediate product obtained by the method described in any one of claims 6 to 8.

10. A method of producing a carbonaceous material for non-aqueous electrolyte secondary battery negative electrodes, the method comprising the steps of:

Heat treatment the intermediate product produced according to the method described in claim 6 or 7 at 1000°C or higher but 1500°C or lower, and

milling the intermediate product or a heat treated product thereof.

11. A method of producing a carbonaceous material for non-aqueous electrolyte secondary battery negative electrodes, the method comprising a step of heat treatment the intermediate product produced according to the method described in claim 8 at 1000°C or higher but 1500°C or lower.

12. A carbonaceous material for non-aqueous electrolyte secondary battery negative electrodes obtained by the production method described in claim 10 or 11.

13. A method of producing a negative electrode for non-aqueous electrolyte secondary batteries, the method comprising the steps of: producing a carbonaceous material for non-aqueous electrolyte secondary battery negative electrodes according to the method described in claim 10 or 11, and producing a negative electrode for non-aqueous electrolyte secondary batteries using the carbonaceous material for non-aqueous electrolyte secondary battery negative electrodes.

14. A method of producing a non-aqueous electrolyte secondary battery, the method comprising the steps of: producing a negative electrode for non-aqueous electrolyte secondary batteries according to the method described in claim 13, and producing a non-aqueous electrolyte secondary battery using the negative electrode for non-aqueous electrolyte secondary batteries.

15. A method of producing a vehicle, the method comprising the steps of: producing a non-aqueous electrolyte secondary battery according to the method described in claim 14, and mounting the non-aqueous electrolyte secondary battery.

<div align="center">

**INTERNATIONAL SEARCH REPORT**

</div>

| International application No. |
| --- |
| PCT/JP2013/073434 |

A.  CLASSIFICATION OF SUBJECT MATTER
*H01M4/587*(2010.01)i, *C01B31/02*(2006.01)i

According to International Patent Classification (IPC) or to both national classification and IPC

B.  FIELDS SEARCHED

Minimum documentation searched (classification system followed by classification symbols)
H01M4/587, C01B31/02

Documentation searched other than minimum documentation to the extent that such documents are included in the fields searched
Jitsuyo Shinan Koho          1922–1996   Jitsuyo Shinan Toroku Koho   1996–2013
Kokai Jitsuyo Shinan Koho    1971–2013   Toroku Jitsuyo Shinan Koho   1994–2013

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X | JP 2000-327316 A  (Sony Corp.), | 1-6,8-14 |
| Y | 28 November 2000 (28.11.2000), | 7-15 |
| | claims; paragraphs [0042], [0053] to [0066], [0078] | |
| | (Family: none) | |
| | | |
| Y | JP 10-21919 A  (Kureha Chemical Industry Co., Ltd.), | 7-15 |
| | 23 January 1998 (23.01.1998), | |
| | paragraphs [0001], [0068], [0069], [0074] | |
| | & US 6303249 B1           & EP 817295 A2 | |
| | & DE 69717550 D           & KR 10-0264400 B | |
| | & CA 2207462 A1 | |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 20 November, 2013 (20.11.13) | 03 December, 2013 (03.12.13) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2013/073434 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2004-253363 A (Hitachi, Ltd., Hitachi Industries Co., Ltd.), 09 September 2004 (09.09.2004), paragraphs [0001], [0020], [0021], [0035] to [0040] & US 2004/0126662 A1 | 15 |
| A | JP 2001-86933 A (Sapporo Breweries Ltd.), 03 April 2001 (03.04.2001), paragraph [0014] (Family: none) | 1-15 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H08064207 A
- JP H09161801 A
- JP H10021919 A
- JP 2000268823 A